# EUROPEAN PATENT APPLICATION

(11) **EP 4 549 080 A1**
(43) Date of publication of application: **07.05.2025**
(21) Application number: 23207087.0
(22) Date of filing: 31.10.2023
(51) Int. Cl.: B23Q 1/00, B23Q 17/00

(54) **A CLAMPING SYSTEM AND A METHOD FOR OPERATING THE CLAMPING SYSTEM**

(71) Applicant: System 3R International AB, 162 50 Vällingby (SE)
(72) Inventor: Sjöstedt, Johan, 16572 Hässelby (SE)
(74) Representative: Li Schrag, Yue

(57) **Abstract**

The present invention is related to a method for operating a clamping system including a pallet for holding a workpiece or a tool having a pallet contact surface and a pallet locking mechanism and a chuck having a chuck contact surface and a chuck locking mechanism. The chuck includes a detection air channel for supplying a pressurized air into the chuck through a detection air inlet formed on the outer surface of the chuck and a detection hole open on the chuck contact surface communicatively connected with the detection air channel. The clamping system further comprises a valve arranged in the feeding line of the detection air inlet and a pressure sensor arranged between the valve and the detection air inlet. The method comprises the steps of: opening the valve and supplying the pressurized air with a defined pressure into the detection air channel of the chuck through the detection air inlet; conducting a clamping procedure by approaching the pallet contact surface to the chuck contact surface until the pallet locking mechanism interacts with the chuck locking mechanism to clamp the pallet with the chuck, wherein in the clamped state a gap is formed between the pallet contact surface and the chuck contact surface; conducting a clamping-state detecting procedure after the clamping procedure.

## Description

### FIELD OF THE INVENTION

The present invention is related to a clamping system and a method for operating the clamping system. In particular, the present invention is related to a detecting device for detecting the clamping state of a pallet and a chuck.

### BACKGROUND OF INVENTION

Clamping devices applied to clamp workpieces or machining tools with high precision are demanded in the machining of the workpiece. Such clamping systems ae widely used in the field of machining such as milling, turning, electrical discharge machining or laser machining. Such machining processes are conducted by the machine tools. In order to hold the workpiece or machining tools securely and precisely in the machine tool, clamping systems having high precision are essential to ensure the machining security and the machining precision.

US 9 108 286 discloses a clamping device for a tool or a workpiece comprising a chuck and a holder for holding the workpiece or a tool.

Since the machining precision is directly dependent on the reproducibility of the clamping process of the different tools, it is essential to ensure the clamping precision. Besides improving the references in X, Y and Z of the clamping system, sensor units are introduced in the clamping system to further improve the clamping precision.

US 8 308169 discloses a chucking fixture for a tool or a workpiece which comprises a chuck and a toolholder or workholder matching the chuck. The chuck has posts having bearing surfaces for orienting the tool or workpiece in an X and Y direction and end faces for establishing a plane perpendicular to the Z direction. A device for measuring the distance between the chuck and the toolholder or workholder are formed in the bearing surfaces and in the end faces.

### SUMMARY OF THE INVENTION

It is an objective to provide a method for operating a clamping system such that the clamping precision can be monitored. In particular, it is an objective of this invention to provide a clamping system with an improved clamping status monitoring.

According to the present invention, these objectives are achieved through the features of independent claims. In addition, further advantageous embodiments follow from the dependent claims and the description.

The present invention is related to a method for operating a clamping system including a pallet for holding a workpiece or a tool having a pallet contact surface and a pallet locking mechanism and a chuck having a chuck contact surface and a chuck locking mechanism. The chuck includes a detection air channel for supplying a pressurized air into the chuck through a detection air inlet formed on the outer surface of the chuck and a detection hole open on the chuck contact surface communicatively connected with the detection air channel. The clamping system further comprises a valve arranged in the feeding line of the detection air inlet and a pressure sensor arranged between the valve and the detection air inlet.

The method comprises the steps of: opening the valve and supplying the pressurized air with a defined pressure into the detection air channel of the chuck through the detection air inlet; conducting a clamping procedure by approaching the pallet contact surface to the chuck contact surface until the pallet locking mechanism interacts with the chuck locking mechanism to clamp the pallet with the chuck; conducting a clamping-state detecting procedure after the clamping procedure.

The clamping-state detecting procedure includes the steps of: closing the valve to stop supplying the pressurized air into the detection air channel; measuring the pressure at the detection air inlet by the pressure sensor at at least two different times within a defined time interval while the valve is closed and the pallet and the chuck are in the clamped state; determining a pressure change by calculating the pressure difference of the measured pressures by a calculating module; and determining if a gap between the pallet contact surface and the chuck contact surface exists based on the determined pressure change.

The chuck and the pallet are in general manufactured very precisely. Ideally, in the clamped state the pallet contact surface lies perfectly on the chuck contact surface and therefore no gap exists. However, the contact surface of the pallet is not always seamless in contact with the contact surface of the chuck due to the damage of the contact surface of the chuck and other reasons. For example, machining generates dirt and microparticles which can stay on the contact surface of the chuck. Thus, a gap may exist between these two contact surfaces. If no gap exists, there is no air leakage through the detecting hole because the detecting hole is sealed by the pallet contact surface. If a gap exists, a leakage path is formed through the detecting hole and the gap. Detecting the existence of the gap is helpful to timely identify the bad clamping quality of the pallet and the chuck. However, precisely measuring the gap size in a reliable way in a machine environment is a challenging task because the gap size is in the range of micrometers if a gap exists. Moreover, the measurement must be conducted in the clamped state and in most applications in the machine tool, hence, there is only limited space for arranging the measurement device close to the area to be measured.

Another challenge is to provide a method that can be broadly utilized in different types of clamping system. There are many various types of existing clamping devices. Adding a sensor into the clamping device to provide intelligent monitoring function requires space and design change of the clamping device. However, air is almost always available for any machine tool. Additionally, air channels are normally provided in the chuck for chuck clamping mechanism and for other functions such as cleaning the contact surface. If these existing air channels can be used for the detection, the method can be flexibly applied for different types of clamping device without significant changes on the clamping device itself. The method of the present invention provides the possibility to utilize existing clamping devices to precisely obtain the gap size, for example in the range of 3 - 5 µm or even less.

Another advantage of the method of the present invention is the pressurized air must not be continuedly supplied during the whole measurement period. It is an energy-saving method. The pressure measurement is conducted under the condition that no pressurized air is supplied into the detection air channel during the measurement phase. The pressurized air is only supplied into the detection channel for a short time period before the measurement.

In further, the pressure sensor is arranged on the side of the inlet, namely at the same side of supplying the pressurized air not at an outlet of the air channel. The valve and the pressure sensor are arranged at the outside of the chuck thus, the method is not limited by the space inside of the chuck.

In one variant, the valve is opened for supplying the pressurized air into the detection channel before the pallet is clamped with the chuck. This variant has the advantage that the contact surface can be cleaned by the air flowing out of the detection hole.

In another variant, the valve is opened for supplying the pressurized air into the detection channel after the pallet is clamped with the chuck. In this variant, the pallet is first clamped with the chuck, then the valve is opened, and the air is supplied into the chuck. After a short period, the valve is closed to stop supplying the pressurized air, and the pressure measurements is conducted.

The clamping-state detecting procedure is conducted after the clamping procedure. This can be performed immediately after the clamping procedure or delayed for a defined time period. This procedure must be conducted by maintaining the valve in the closed state and the pallet and chuck in the clamped state. When the valve is closed, the supplied pressurized air is blocked by the valve and no air is supplied further into the detection air channel. Since the gap size is so tiny, namely in the range of micrometers, a substantially closed volume is formed in the detection air channel. Since the air is supplied into the detection air channel before closing the valve, this volume is pressurized. However, due to the air leakage through the detection hole and the gap, the pressure in this closed volume will drop over time. By detecting the pressure change of this closed volume within a defined time period, the gap size can be estimated. To achieve this, the pressure at the detection air inlet is measured. It is possible to arrange the pressure sensor in the detection air channel. However, arranging the pressure sensor at outside of the chuck can ease the design of the chuck without compromising the measurement accuracy. The first air pressure P1 is recorded at a defined time after creating the closed volume to enable stabilization of pressure readings. Then a second air pressure P2 is measured after a defined time interval. The calculation module is configured to receive the two measured pressures P1 and P2 and to calculate the delta between P1 and P2 to determine the gap size. Certainly, the number of the pressure measurements are not limited. The pressure can be measured during the whole clamping phase to observe the pressure change for a long period.

In one embodiment, the method comprises the following steps with the order of the steps a) to c):
a. opening the valve and supplying the pressurized air with a defined pressure into the detection air channel of the chuck through the detection air inlet;
b. conducting the clamping procedure; and
c. conducting the clamping-state detecting procedure.

Preferably, the gap size is determined by comparing the determined pressure change with calibration data including a plurality of pressure changes and the corresponding gap sizes.

The calibration data can be obtained by conducting a calibration test measurement using a calibration tool on the clamping device that has a defined gap. Preferably, calibration data is stored in a storage module for example in the form of a look-up table. For example, calibration set including a pallet and chuck applied for obtaining the calibration data can be manufactured. The contacting surface of the pallet and/or chuck is specially manufactured to precisely feature a defined gap size. The pressure change of calibration set is measured and the defined gap size and the measure pressure change are stored.

In particular, the method comprises comparing the gap size with a gap threshold to determine if the gap is within a tolerant range. If the gap size is within a tolerant range, the clamping quality is ensured, thus no measures must be taken. However, if the gap size is out of the tolerant range, actions should be taken to avoid any damage. For example, if several pallets are clamped with the same chuck and all the gap sizes extend the tolerant range, a bad condition of the chuck can be derived and hence the chuck should be replaced.

In an advantageous variant, an action is determined based on the determined gap size. In particular, the action is one or more of: generating an error signal, unclamping the pallet and the chuck, replacing the pallet or chuck and displaying the gap size.

In some embodiments, identification information of the pallet and the chuck is associated with the determined gap size.

Advantageously, each pallet is provided with an identification unit for identifying the pallet and generating the pallet identification information. In particular, the identification unit is a RFID chip.

When different pallets are clamped with different chucks, the gap size vary. Even the same pallet is clamped with the same chuck, the gap size can vary in different clamping procedure. For example, dirt sticked on the contact surface can vary in size and/or in amount. This variation can cause the variation of the gap size. When one pallet is clamped with the chuck, the identification information of this pallet and this chuck is acquired and stored in a storage unit. In further, the determined gap size can be associated to the corresponding pallet and chuck by storing the identification information and the determined gap size. This information can be retrieved later for different purposes. For example, if the machine part has bad quality, this information can be helpful to identify the problems occurred during the production.

In one variant, the determined pressure change and/or gap size is analysed to identify the clamping state of the pallet and the chuck which are currently in operation. For example, the determined gap size of is compared with a threshold value to determine how good the pallet is clamped with the chuck.

In another variant, the determined pressure changes and/or gap sizes over a time period are analysed. This is aimed to observe how the gap size changes in the course of time. For example, different pallets are clamped with the same chuck over a time period. Each time a pallet is clamped with the chuck, the gap size is determined. A history of clamping states of different pallets with the same chuck can be generated by collecting the gap sizes over this time period. A damaged chuck or the wear of the chuck can be detected based on the history. If the gap sizes get worse, a service requirement of the chuck can be identified.

In order to improve the clamping quality a cleaning procedure can be conducted. Normally, the chuck is mounted on a machine table or a spindle, during the machining the chuck contact surface is contaminated by the debris. Thus, a cleaning procedure before clamping a new pallet thereon can remove the dirt on the contact surface to ensure the clamping quality. Before the clamping procedure the chuck contact surface is cleaned by conducting the cleaning procedure. The pressurized air is supplied to a cleaning air channel connected to a cleaning hole open on the contact surface. The cleaning air channel is formed inside the chuck and is connected to the cleaning hole. The pressurized air can flow through the cleaning channel and the cleaning hole to reach the contact surface.

Preferably, the detection air channel serves as the cleaning air channel and the detection hole serves as the cleaning hole. This provides the advantage that the existing cleaning channel can be used for the gap detection.

In one variant, the chuck locking mechanism is activated pneumatically, thus the air channel applied for clamping can also be used as the detection air channel.

In one variant, the clamping-state detecting procedure is controlled by a control module. The control module is configured to control the valve and the pressure sensor such that the pressure measurements can be conducted after the valve is closed.

To activate the clamping-state detection procedure the control unit receives a gap-detection signal.

In one variant, the gap-detection signal is input by activating an activation button connected to the control unit. Alternatively, the gap-detection signal is received from a central control unit. In particular, the central control unit is configured to control the clamping procedure of the pallet and the chuck.

In further, a storage module is provided to store the various data, such as the measured pressures, the calibration data, the determined gap sizes, the identification information of the pallet and the chuck.

According to the present invention, a clamping system for a workpiece or a tool used in a machine tool comprises a pallet for holding a workpiece or a tool, a chuck, a valve, a pressure sensor, a control module and a calculation module. The pallet has a pallet contact surface and a pallet locking mechanism. The chuck has a chuck contact surface and a chuck locking mechanism, wherein the chuck includes a detection air channel for supplying a pressurized air into the chuck through a detection air inlet formed on the outer surface of the chuck and a detecting hole open on the chuck contact surface communicatively connected with the air channel. The valve is arranged in the feeding line of the detection air inlet. When the valve is open it allows the pressurized air flowing into the detection air channel of the chuck through the detection air inlet. When the valve is closed it blocks the pressurized air flowing into the detection air channel The pressure sensor is arranged between the valve and the air inlet configured to measure the pressure at the detection air inlet. The control module is configured to control the valve and the pressure sensor such that the following steps are conducted:
i. closing the valve to stop supplying the pressurized air into the detection air channel, in particular after the pallet is clamped with the chuck; and
ii. measuring the pressure at the detection air inlet by the pressure sensor at at least two different times within a defined time interval while the valve is closed and the pallet and the chuck are in the clamped state;

The calculating module is configured to determine a pressure change by calculating the difference of the measured pressures and to determine if a gap between the pallet contact surface and the chuck contact surface exists based on the determined pressure change.

In a preferred variant, the control module is configured to control the valve and the pressure sensor such that the following steps are conducted:
i. opening the valve to supply the pressurized air into the detection air channel of the chuck;
ii. closing the valve to stop supplying the pressurized air into the detection air channel, in particular after the pallet is clamped with the chuck; and
iii. measuring the pressure at the detection air inlet by the pressure sensor at at least two different times within a defined time interval while the valve is closed and the pallet and the chuck are in the clamped state;

In a variant, the control module is configured to control the valve, the pressure sensor, the pallet and the chuck such that the following steps are conducted:
i. opening the valve to supply the pressurized air into the detection air channel of the chuck;
ii. clamping the pallet with the chuck;
iii. closing the valve to stop supplying the pressurized air into the detection air channel, in particular after the pallet is clamped with the chuck; and
iv. measuring the pressure at the detection air inlet by the pressure sensor at at least two different times within a defined time interval while the valve is closed and the pallet and the chuck are in the clamped state;

The valve and the pressure sensor are arranged at the outside of the chuck. Such arrangement provides a simple design of the clamping system. Another advantage of the clamping system is that the pressurized air must not be continuedly supplied during the whole measurement period. It is an energy-saving system. The pressure measurement is conducted under the condition that no pressurized air is supplied into the detection air channel during the measurement phase.

In one embodiment, the valve, the pressure sensor, the control module and the calculation unit are included in one housing forming a detecting device. Additionally, an air input and an air output are provided on the housing. The air input is connected to the valve for supplying the air into the valve. The air output is connected with the pressure sensor and can be further connected to the detection air inlet of the chuck. An air source can be connected to the air input such that the pressurized air can flow through the air input, the valve, the pressure sensor, the air output to the detection air inlet, when the valve is open. The detecting device can be flexibly applied. It can be arranged at any position outside of the chuck. It can be combined with various types of pallet and chuck, if a detection air channel is formed in the chuck and a detection hole connected to the detection air channel has an opening on the chuck contact surface. Depending on the dimension of the contact surface the detection hole can have different dimensions. In particular, the diameter of the detecting hole is in the range of millimeters, for example, 0.5-3 mm.

The detecting device can be arranged in the proximity of the chuck, e.g., on the machine table. Each machine table is equipped with a detecting device. When the chuck is mounted on the machine table, the detecting device can be connected to the chuck by connecting the air output of the detecting device with the detection air inlet of the chuck. Normally, an air source is available in the machine tool, so the air can be easily supplied into the detecting device and then further to the chuck by connecting the air source with the air input of the detecting device.

In one variant, an activating mechanism is provided on the housing such as a button to activate the clamping-state detection procedure including closing the valve and starting the pressure measurements. By this way, a stand-alone system can be achieved. When the pallet is clamped with the chuck, the operator can push the button and the clamping-state procedure starts automatically. No higher-level control is needed.

In some embodiments, the detection and the clamping are controlled by a higher-level control unit. The system comprises a central control unit, which can be arranged remotely from the pallet and the chuck. The central control unit is configured to control the clamping procedure. In further, the central control unit is configured to send a gap-detection signal to the control module for activating the clamping-state detection process.

For example, the central control unit first controls an automatic pallet changer to clamp the pallet with the chuck. Afterwards, the central control unit sends the gap-detection signal to the control module to activate the detection process. Upon receiving this signal, the control module controls the valve from open state to the close state and controls the pressure sensor to records the pressures.

It is also possible, that the control module and the calculation module are arranged in the central control unit.

In one preferred variant, each pallet of the clamping system is provided with an identification unit for identifying the pallet and generating the pallet identification information, in particular the identification unit is a RFID chip.

In the present invention, a detecting device for detecting the clamping state of a pallet for holding a workpiece or a tool and a chuck is disclosed. The pallet has a pallet contact surface and a pallet locking mechanism, and the chuck has a chuck contact surface and a chuck locking mechanism. The chuck includes a detection air channel for supplying a pressurized air into the chuck through a detection air inlet formed on the outer surface of the chuck and a detecting hole open on the chuck contact surface communicatively connected with the detection air channel. The device comprises a valve, a pressure sensor, a control module and a calculation unit. The valve is arranged in the feeding line of the detection air inlet. When the valve is open it allows the pressurized air flowing into the detection air channel of the chuck through the detection air inlet. When the valve is closed it blocks the pressurized air flowing into the detection air channel. The pressure sensor is arranged between the valve and the detection air inlet configured to measure the pressure at the detection air inlet. The control module is configured to control the valve and the pressure sensor such that the following steps are conducted:
v. closing the valve to stop supplying the pressurized air into the detection air channel;
vi. measuring the pressure at the detection air inlet by the pressure sensor at at least two different times within a defined time interval while the valve is closed and the pallet and the chuck are in the clamped state;

The calculating module is configured to determine a pressure change by calculating the difference of the measured pressures and to determine a gap size defined by the distance between the pallet contact surface and the chuck contact surface based on the determined pressure change.

All the variants of the present invention can be combined. In order to avoid the repetition of features, the features of the method can be referred to the device and vice versa.

### BRIEF DESCRIPTION OF THE DRAWINGS

In the following, a more particular description of the present invention is further described. The embodiments are described and explained with details with reference to accompanying drawings in which:
- Fig. 1: illustrates a schematic of the first variant of the clamping system;
- Fig.2: illustrates a timing diagram of the clamping system shown in the figure 1;
- Fig.3: illustrates a diagram of the pressure change of the clamping system shown in the figure 1;
- Fig.4: illustrates a schematic of the second variant of the clamping system;
- Fig. 5, 6, 7, 8: show the first type of pallet and the chuck; and
- Fig. 9: shows the second type of the pallet and chuck.

### EXEMPLARY EMBODIMENTS

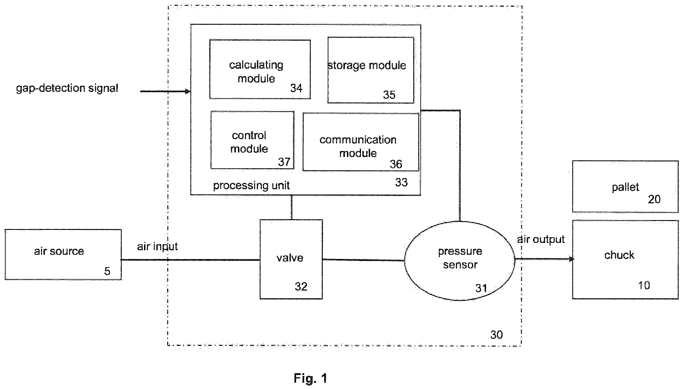

The figure 1 shows a schematic of the first variant of the clamping system 1. In order to improve the monitoring of the clamping state of a pallet 20 and a chuck 10 a detecting device 30 is provided. It includes a valve 32 for opening and closing the pressurized air passage, a pressure sensor 31 and a processing unit 33. For example, the processing unit is a Programmable Logic Controller. The detecting device has two inputs and one output. The first input is an air input for connecting an air source 5 to one end of the valve for supplying the pressurized air therein. The second input is a signal input for receiving a gap-detection signal which triggers the clamping-state detecting procedure. The output is an air output being connected with the chuck, in particular with a detection air inlet formed on the outer surface of the chuck. The pressure sensor is positioned after the valve because it serves to measure the pressure change of a closed volume formed by a detection air channel in the chuck.

The processing unit 33 includes a calculating module 34, a control module 37, a communication module 36 and a storage module 35. The control module is configured to control the valve and the pressure sensor. The storage module is configured to store data such as the measurement data or processed data. The communication module is configured to communicate with the pressure sensor to acquire the measurement data. In further, the communication module is configured to communicate with an external device to transmit the data received from the pressure sensor or the data processed by the calculating module or stored in the storage module. It is also possible to integrate further communication modules for allowing the detecting device to communicate with other devices, such as machine tool and automation system. The further communication module includes wired communication interface or wireless communication interface.

The processing unit, the valve and the pressure sensor are embedded in a housing having two input connections and one output connection. For operating the clamping system an air source 5 is connected with air input of the detecting device to supply the pressurized air. The air output is connected with the chuck. The gap-detection signal is connected to an activating mechanism such as a button. The activating mechanism is preferably mounted on the outside of the housing of the detecting device. However, it is possible to mount the activating mechanism separately from the housing of the detecting device and connecting the activating mechanism with the gap-detection signal input by a cable. It is also possible to send the directly the signal wirelessly to the processing unit through the communication module.

For example, the chuck is mounted on a machine table. The operator can clamp the pallet with the chuck and activate the activating mechanism to start the clamping-state detection. When the operator pushes the button, the valve is closed and the pressure at the detection inlet of the chuck is measured. For example, the first measurement is conducted at the 2 seconds after the valve is closed. The second pressure is conducted three seconds later after the first measurement is conducted.

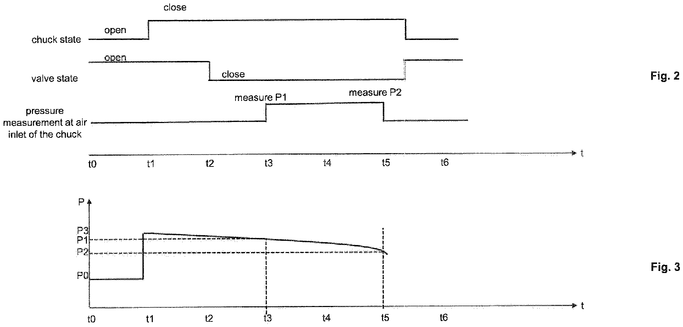

Figure 2 shows a timing diagram of the method of operating the clamping system. Three phases are shown: initial phase, clamping phase and the detecting phase. In the initial phase from t0 to t1, the chuck is open, and the valve is open as well. This phase is aimed to supply the pressurized air into the chuck. In the clamping phase from t1 to t2, the clamping procedure is executed. During this phase, the pallet is clamped with the chuck by interacting the pallet locking mechanism and the chuck locking mechanism while the valve remains open. In the detecting phase from t2 to t5, the clamping-detection procedure is carried out. During the whole measurement, the chuck is closed and the valve is closed to stop supplying the pressurized air. The gap measurement can start at t2, but it is preferred to wait for a defined time interval until the pressure inside the detection air channel is stabilized. At the time t3, the gap measurement starts. The first pressure sensor measures a first pressure P1 at the time t3 and the second pressure P2 at the time t5. The timing diagram of the figure 2 is one of possible variants. Other possible variants are not illustrated in the figures. For example, the valve is opened after the pallet and the chuck is clamped for supplying the pressurized air into the closed volume for a defined time period and closed again before pressure measurements are carried out.

Figure 3 shows the corresponding pressure variation during different phases. In the initial phase, a pressurized air with a pressure P0 is supplied to the detection air channel of the chuck, thus, the pressure in the air channel is P0. P0 maybe lower than the pressure at the air source because the chuck is open. When the pallet is clamped with the chuck, the detection air channel is closed, the pressure in the detection air channel increases to P3, but it can still be lower than the pressure at the air source due to pressure drop along the feeding pipe. Between the times t2 and t5, the valve is closed and a substantially closed volume is generated in the detection air channel. However, due to the air leakage through the detecting hole and the gap between the pallet contact surface and the chuck contact surface, the pressure decreases slowly. The pressure is decreased from P1 to P2. The calculation module receives these two measured pressures and determines a pressure change and calculate the gap size based on the calculated pressure change.

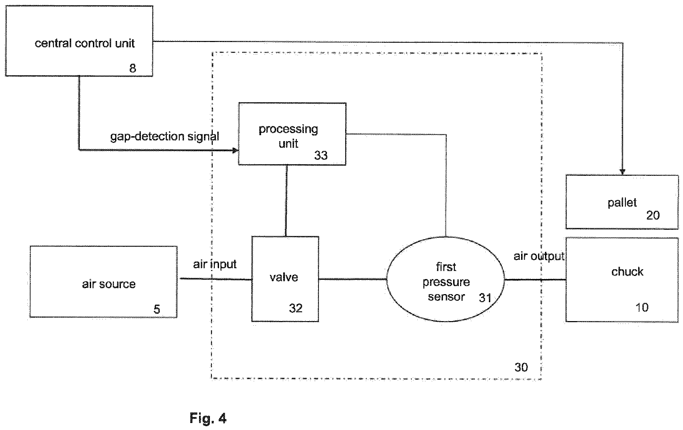

Figure 4 shows another variant of the clamping system. This system includes additionally a central control unit 8 which is configured to centrally control the whole system. The central control unit is provided to communicate with the processing unit, in particular with the control module. The central control unit is configured to control the clamping procedure of the pallet and the chuck. The center control unit can be a server arranged in the production shopfloor. By utilizing the central control unit additional automation devices can be combined with the clamping system. For example, a chuck is mounted on the machine table of a machine tool. The central control unit controls an automation device serving to pick up the pallet from a pallet storage, transport to a position in the proximity of the machine table and clamp the pallet with the chuck. Additionally, the central control unit controls the control module to start the gap-detecting procedure by sending the gap-detection signal to the control module. In addition, the central control unit can control the air source to change the pressures supplied into the chuck. A cleaning procedure can also be activated by the central control unit. The processing unit is configured to transmit the measured pressures to the central control unit for determining the gap size or to transmit the determined gap sizes to the central control unit. Additionally, the processing unit can transmit the identification information of the pallet and the chuck also to the central control unit.

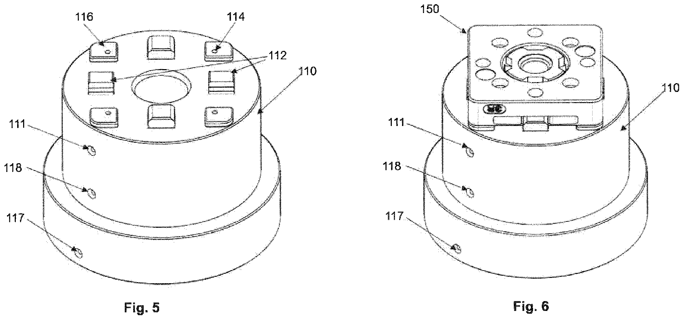

Figures 5, 6, 7 and 8 show a first type of chuck and the pallet. The figures 5 illustrates a three-dimensional view of a first chuck 110. The figures 6 illustrates a three-dimensional view of the first chuck 110 and a first pallet 150 in the clamped state. The first chuck includes a plurality of first chuck referencing elements 112 formed on the top surface of the chuck. Normally, referencing elements for all three directions X, Y and Z are needed to ensure a precision positioning. Certainly, the first pallet is also provided with referencing elements in all three directions. The first chuck contact surface 116 is formed on a protrusion. In particular, in this example four contacting surfaces are provided on the top surface of the chuck. Additionally, detecting hole 114 is open on the contact surface. Especially, four detecting holes are formed in the chuck. However, the number of the contact surfaces and the detecting holes are not limited to four and can be less or more than four.

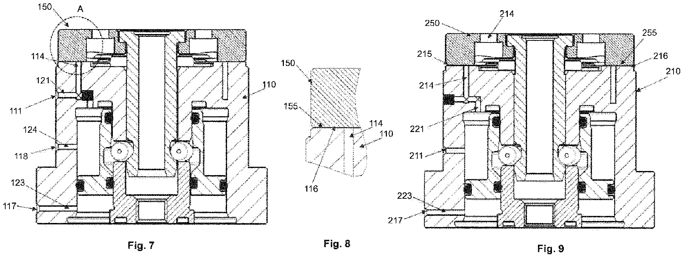

This chuck has several air channels serving for different functions. As shown in figure 7 which is a sectional view of the figure 6, beside a first detection air channel 121 a first chuck opening air channel 123 and a first chuck turbo air channel 124 are formed inside the chuck. They are not connected to each other. When the pressurized air is supplied into the first chuck opening air channel, the chuck locking mechanism is deactivated and the chuck is opened for receiving the pallet. By deactivating the pressurized air in the first chuck opening air channel, the chuck is closed due to a spring-loaded locking mechanism. If the pallet is already positioned on the chuck, the pallet is clamped with the chuck. In some applications, an increased clamping force is required. For such applications, a so-called turbo function can be activated. When the pressurized air is supplied into the first chuck turbo air channel, the clamping force generated by the locking mechanism can be increased. Only the first detection air channel is connected to the first detecting hole since this channel is applied for the gap measurement. If more than one detecting holes are formed in the chuck, all detecting holes are connected with the first detection air channel such that only one air inlet is needed for supplying the pressurized air. For each air channel an air inlet is provided on the outer surface of the chuck for connecting the pipe for supplying the air. A first chuck opening air inlet 117 is connected with the first chuck opening air channel. A first chuck turbo air inlet 118 is connected with the first chuck turbo air channel. A first detection air inlet 111 is connected with the first detection air channel. In this example, all the air inlets are arranged on the sidewall of the chuck. However, the position of the inlet is not limited and can be also on the bottom surface of the chuck.

For clamping the pallet to the chuck, a first chuck locking mechanism interacts with a first pallet locking mechanism. Additionally, in the clamped state, a gap may exist due to for example debris sticked on the contact surface of the chuck. If a gap exists, a first pallet contact surface 155 is not perfectly lied on the contact surface of the chuck. Figure 8 shows the enlarged view of the part A of figure 7. Since the gap size is the range of micrometer, it is hardly to be depicted.

Figure 9 shows a sectional view of a second type of pallet and the chuck in the clamped state. The first chuck is an example of proving separate air channels for various functions. The second chuck illustrated in the figure 9 shows an example of sharing one air channel for different functions. The detection air channel is also applied for increasing the clamping force of the chuck locking mechanism and the cleaning of the contact surface. This is possible because the cleaning procedure, the turbo function, and the gap-detection procedure occur in a sequential manner.

The second chuck has a second chuck contact surface 216 and a second detecting hole 214 on the second chuck contact surface. The second chuck features also referencing elements and the locking mechanism. A second gap 215 may exist between the second pallet contact surface and the second chuck contact surface when the pallet is clamped with the chuck.

A second chuck open air channel 223 is formed inside the chuck and connected to a second chuck open air inlet 217 arranged on the outer surface of the chuck. There is only one air channel and one air inlet for gap detection and the turbo function. The second detection air channel 221 is connected inside the chuck with the second turbo air channel. A second detection air inlet 211 is formed on the outer surface of the second chuck. For different purposes, the air pressure of the supplied air can vary. The second detection air channel is connected with a second detecting hole 214 open on the contact surface of the chuck.

### LIST OF REFERENCES

- 1: clamping system
- 3: second pressure sensor
- 4: central control unit
- 5: air source
- 6: flow restriction
- 7: second pressure sensor
- 8: center control unit
- 10: chuck
- 20: pallet
- 30: detecting device
- 31: first pressure sensor
- 32: valve
- 33: processing unit
- 34: calculating module
- 35: storage module
- 36: communication module
- 37: control module
- 110: first chuck
- 111: first detection air inlet
- 112: references of first chuck
- 114: first detection hole
- 115: first gap
- 116: first chuck contact surface
- 117: first chuck opening air inlet
- 118: first chuck turbo air inlet
- 121: first detection air channel
- 123: first chuck opening air channel
- 124: second chuck turbo air channel
- 150: first pallet
- 155: first pallet contact surface
- 210: second chuck
- 211: second detection air inlet
- 214: second detection hole
- 215: second gap
- 216: second chuck contact surface
- 217: second chuck opening air inlet
- 221: second detection air channel
- 223: second chuck opening air channel
- 250: second pallet
- 255: second pallet contact surface

## Claims

1. A method for operating a clamping system (1) including a pallet (20, 120, 220) for holding a workpiece or a tool having a pallet contact surface (155, 255) and a pallet locking mechanism and a chuck having a chuck contact surface (115, 215) and a chuck locking mechanism, wherein the chuck includes a detection air channel for receiving a pressurized air supplied through an detection air inlet formed on the outer surface of the chuck and a detection hole open on the chuck contact surface communicatively connected with the detection air channel, wherein the clamping system further comprises a valve arranged in the feeding line of the detection air inlet and a pressure sensor arranged between the valve and the detection air inlet comprises the following steps:
a. opening the valve and supplying the pressurized air with a defined pressure into the detection air channel of the chuck through the detection air inlet, in particular when the pallet and chuck are in an unclamped state;
b. conducting a clamping procedure by approaching the pallet contact surface to the chuck contact surface until the pallet locking mechanism interacts with the chuck locking mechanism to clamp the pallet with the chuck;
c. conducting a clamping-state detecting procedure after the clamping procedure including:
i. closing the valve to stop supplying the pressurized air into the detection air channel;
ii. measuring the pressure at the detection air inlet by the pressure sensor at at least two different times within a defined time interval while the valve is closed and the pallet and the chuck are in the clamped state;
iii. determining a pressure change by calculating the pressure difference of the measured pressures by a calculating module; and
iv. determining if a gap between the pallet contact surface and the chuck contact surface exists based on the determined pressure change.

2. The method according to claim 1, wherein a gap size defined as the distance between the pallet contact surface and the chuck contact surface is determined, in particular the gap size is determined by comparing the determined pressure drop with calibration data including a plurality of pressure changes and the corresponding gap sizes.

3. The method according to claim 2, wherein the method comprises comparing the gap size with a gap threshold to determine if the gap is within a tolerant range.

4. The method according to claim 2 or 3, wherein an action is determined based on the determined gap size, in particular the action is one or more of: generating an error signal, unclamping the pallet and the chuck, and displaying the gap size.

5. The method according to one of claims 2 to 4, wherein identification information of the pallet and the chuck is associated with the determined gap size.

6. The method according to claim 5, wherein each pallet is provided with an identification unit for identifying the pallet and generating the pallet identification information, in particular the identification unit is a RFID chip.

7. The method according to one of claims 1 to 6, wherein before the clamping procedure the chuck contact surface is cleaned by conducting a cleaning procedure, wherein the pressurized air is supplied to a cleaning air channel connected to a cleaning hole open on the contact surface, in particular the detection air channel servers as the cleaning air channel and the detection hole serves as the cleaning hole.

8. The method according to one of claims 1 to 7, wherein the clamping system comprises a control module configured to control the valve and the pressure sensor for conducting the clamping-state detection procedure and a storage module configured to store the data, in particular the control module, the storage module and the calculation module are included in a processing unit.

9. The method according to one of claims 1 to 8, wherein the control module is configured to receive a gap-detection signal for activating the clamping-state detection procedure, in particular the gap-detection signal is input by activating an activating mechanism connected to the control module or received from a central control unit configured to control the clamping procedure of the pallet and the chuck.

10. A clamping system for holding a workpiece or a tool used in a machine tool comprises:
a. a pallet for holding the workpiece or the tool having a pallet contact surface and a pallet locking mechanism;
b. a chuck having a chuck contact surface and a chuck locking mechanism, wherein the chuck includes a detection air channel for supplying a pressurized air into the chuck through a detection air inlet formed on the outer surface of the chuck and a detecting hole open on the chuck contact surface communicatively connected with the detection air channel;
c. a valve arranged in the feeding line of the detection air inlet, wherein when the valve is open it allows the pressurized air flowing into the detection air channel of the chuck through the detection air inlet, wherein when the valve is closed it blocks the pressurized air flowing into the detection air channel;
d. a pressure sensor arranged between the valve and the detection air inlet configured to measure the pressure at the detection air inlet;
e. a control module configured to control the valve and the pressure sensor such that the following steps are conducted:
i. closing the valve to stop supplying the pressurized air into the detection air channel;
ii. measuring the pressure at the detection air inlet by the pressure sensor at at least two different times within a defined time interval while the valve is closed and the pallet and the chuck are in the clamped state;
f. a calculating module configured to determine a pressure change by calculating the difference of the measured pressures and to determine if a gap between the pallet contact surface and the chuck contact surface exists based on the determined pressure change.

11. The system according to claim 10, wherein each pallet is provided with an identification unit for identifying the pallet and generating the pallet identification information, in particular the identification unit is a RFID chip.

12. The system according to one of claims 11, wherein the measured pressure and/or the calibration data is associated with the identification unit.

13. The system according to one of claims 10 to 13, wherein the valve, the pressure sensor, the control module and the calculating module are embedded in one housing, in particular an activating mechanism is provided on the outside of the housing and connected to the control module, preferably the activating mechanism is a button.

14. The system according to one of claims 10 to 13, wherein the system comprises a central control unit configured to control the clamping procedure and send a gap-detection signal to the control module to activate the clamping-state detecting procedure.

15. A detecting device for detecting the clamping state of a pallet for holding a workpiece or a tool and a chuck, wherein the pallet has a pallet contact surface and a pallet locking mechanism, and the chuck has a chuck contact surface and a chuck locking mechanism, wherein the chuck includes a detection air channel for supplying a pressurized air into the chuck through a detection air inlet formed on the outer surface of the chuck and a detecting hole open on the chuck contact surface communicatively connected with the detection air channel, the detecting device comprises:
a. a valve arranged in the feeding line of the detection air inlet, wherein when the valve is open it allows the pressurized air flowing into the detection air channel of the chuck through the detection air inlet, wherein when the valve is closed it blocks the pressurized air flowing into the detection air channel;
b. a pressure sensor arranged between the valve and the detection air inlet configured to measure the pressure at the detection air inlet;
c. a control unit configured to control the valve and the pressure sensor such that the following steps are conducted:
i. closing the valve to stop supplying the pressurized air into the detection air channel;
ii. measuring the pressure at the detection air inlet by the pressure sensor at at least two different times within a defined time interval while the valve is closed and the pallet and the chuck are in the clamped state;
d. a calculating module configured to determine a pressure change by calculating the difference of the measured pressures and to determine if a gap the pallet contact surface and the chuck contact surface exists based on the determined pressure change.
